# EUROPÄISCHE PATENTSCHRIFT

(11) **EP 2 982 579 B1**
(45) Veröffentlichungstag und Bekanntmachung des Hinweises auf die Patenterteilung: **18.07.2018**
(21) Anmeldenummer: 14179894.2
(22) Anmeldetag: 05.08.2014
(51) Int. Cl.: B62D 27/02, B62D 65/04, B21J 15/02, F16B 5/04, F16B 19/06, B21J 15/14, B62D 25/02, F16B 19/00, F16B 19/08, F16B 19/04

(54) **Verfahren zur Herstellung eines Kraftfahrzeuges und Kraftfahrzeug**
Method for controlling a motor vehicle and motor vehicle
Procédé de fabrication d'un véhicule automobile et véhicule automobile

(43) Veröffentlichungstag der Anmeldung: 10.02.2016
(73) Patentinhaber: MAGNA STEYR Fahrzeugtechnik AG & Co KG, 8041 Graz (AT)
(72) Erfinder: Hofer, Bernhard, 8053 Graz (AT); Zachnegger, Harald, 8041 Graz (AT)
(74) Vertreter: Zangger, Bernd

(56) Entgegenhaltungen:
- EP-A1- 1 430 989
- EP-A2- 0 931 944
- DE-A1-102004 004 386
- DE-A1-102009 031 838
- DE-A1-102009 048 398
- JP-A- H09 144 725
- US-A1- 2002 172 576
- BUDDE L: "MECHANISCHES FUGEN VON BLECHWERKSTOFFEN ENTWICKLUNGEN UND CHANCEN", TAGUNG WARMEARME FUGETECHNIKEN -KLEBEN, FUGETECHNIKEN KLEBEN,DURCHSETZFUGEN, NIETEN 5-6 MAI 1993, PADERBORN, DE, PADERBORN, DE, 1. Januar 1993 (1993-01-01), Seiten 9-23, XP000472756,

## Beschreibung

### Gebiet der Erfindung

Die vorliegende Erfindung betrifft ein Verfahren zur Herstellung eines Kraftfahrzeuges und ein entsprechend hergestelltes Kraftfahrzeug. Insbesondere betrifft die Erfindung Kraftfahrzeuge die in Modulbauweise hergestellt werden, wobei unabhängig voneinander ein Unterbau und weitere Aufbaumodule des Kraftfahrzeuges hergestellt werden, die anschließend miteinander dauerhaft verbunden werden.

### Stand der Technik

Derartige Verfahren zur Herstellung von Kraftfahrzeugen mittels Modulen sind an sich bekannt. Die EP 2 463 181 A2 beschreibt ein Verfahren zur Herstellung eines Kraftfahrzeuges in welchem vormontierte Module in einer Montagelinie zu einem Gesamtfahrzeug gefügt werden. Die Module werden vor dem Fügen lackiert, der Zusammenbau erfolgt durch Ankleben und/oder Anschrauben der Weiterhin zeigt die DE102004004386 eine genietete Verbindung bei der Herstellung von Kraftfahrzeugteilen. Bekannt ist zudem das Vollstanznietverfahren zur Verbindung von metallischen Bauteilen und auch von Faserverbundbauteilen. Das Vollstanznieten wird zwar im Karosserierohbau eingesetzt, jedoch nur für unlackierte Bleche, da es bei bereits lackierten Bauteilen zu Undichtheiten an der Schnittkante kommt und somit Korrosionsschutzanforderungen nicht erfüllt werden können.

### Zusammenfassung der Erfindung

Es ist eine Aufgabe der Erfindung, ein Verfahren zur Herstellung eines Kraftfahrzeuges anzugeben, das eine hohe Fahrzeugsteifigkeit und eine Erhöhung der Strukturfestigkeit im Crashfall ermöglicht und dabei einen guten Korrosionsschutz gewährleistet. Eine weitere Aufgabe ist es ein Kraftfahrzeug mit erhöhter Strukturfestigkeit anzugeben.

Die Lösung der Aufgabe erfolgt durch ein Verfahren zur Herstellung eines Kraftfahrzeuges umfassend die Schritte:
- Erzeugen eines Unterbaues und zumindest eines Aufbaumoduls des Kraftfahrzeuges, wobei der Unterbau und das Aufbaumodul jeweils zumindest einen Flanschbereich aufweisen,
- Lackieren zumindest des Flanschbereichs des Unterbaus und/oder des Aufbaumoduls,
- Verbinden der Flanschbereiche von Unterbau und Aufbaumodul mittels Vollstanznieten, wobei die Vollstanznieten jeweils einen Kopf mit einer Unterkopfbeschichtung oder Unterkopfdichtung aufweisen, so dass die Unterkopfbeschichtung oder Unterkopfdichtung an dem lackierten Flanschbereich des Unterbaus oder des Aufbaumoduls anliegt.

Unterbau und Aufbaumodul können erfindungsgemäß unabhängig voneinander hergestellt werden und werden bereits vor dem Nieten lackiert, insbesondere tauchlackiert. Zumindest wird dabei einer der Flanschbereiche oder beide Flanschbereiche lackiert, üblicherweise werden die gesamten Bauteile lackiert.

Bei dem hier in der Schrift verwendeten Begriff des Unterbaues kann es sich, ähnlich dem Aufbaumodul, ebenfalls um ein Modul bzw. Unterbaumodul handeln, das als fix und fertiger Zusammenbau einer Struktureinheit verstanden werden kann. Ausstattungskomponenten können darin bereits aufgenommen sein. Oftmals wird es sich bei dem Unterbau um ein im Aufbaugrad dem Aufbaumodul gleichwertiges Modul handeln, zum Beispiel können beide, wie oben erwähnt, bereits lackiert sein.

Die Unterkopfbeschichtung oder Unterkopfdichtung dichtet die Schnittkante, die durch das Stanzen mittels Vollstanzniet entstanden ist, im lackierten Flanschbereich ab. Eine etwaige Beschädigung des Lacks im Kopfbereich wird versiegelt und damit die Dichtheit und der Korrosionsschutz gewährleistet.

Somit wird für die Herstellung eines Kraftfahrzeuges aus bereits vorlackierten Modulen ermöglicht, diese durch Vollstanznieten mechanisch stabil zu verbinden und somit die Strukturfestigkeit zu erhöhen. Insbesondere kann eine stabile Verbindung zwischen einer nassraumseitigen, zum Beispiel metallischen, Struktur und einer trockenraumseitigen, zum Beispiel Faserverbundstruktur herzustellen.

Weiterbildungen der Erfindung sind in den abhängigen Ansprüchen, der Beschreibung sowie den beigefügten Zeichnungen angegeben.

Bevorzugt ist die Unterkopfbeschichtung eine thermoplastische Unterkopfbeschichtung. Derart beschichtete Vollstanznieten werden zum Beispiel von der Firma Kerb-Konus angeboten.

Bevorzugt werden die Vollstanznieten von einer Nassraumseite in Richtung einer Trockenraumseite gesetzt. Der Nietkopf befindet sich dann auf der Nassraumseite, die somit gut abgedichtet wird.

Die Unterkopfdichtung kann durch eine radial außen umlaufende, ringförmige Dichtung gebildet werden.

Bevorzugt schließt die Dichtung am Außendurchmesser des Kopfes, zumindest vor dem Setzen, bündig ab. Hierdurch wird eine störungsfreie automatische Zuführung in einem Setzgerät ermöglicht.

Die Dichtung kann in eine Nut des Kopfes eingearbeitet sein.

Besonders bevorzugt werden der Unterbau und das Aufbaumodul zusätzlich zum Vollstanznieten, insbesondere vor dem Vollstanznieten, durch Kleben und/oder Schrauben verbunden, um besonders hohe Strukturfestigkeit und -steifigkeit zu erreichen.

Ein erfindungsgemäßes Kraftfahrzeug umfasst einen Unterbau und zumindest ein Aufbaumodul des Kraftfahrzeuges, wobei der Unterbau und das Aufbaumodul jeweils zumindest einen Flanschbereich aufweisen, wobei zumindest der Flanschbereich des Unterbaus und/oder des Aufbaumoduls lackiert ist, wobei die Flanschbereiche von Unterbau und Aufbaumodul mittels Vollstanznieten verbunden sind, wobei die Vollstanznieten jeweils einen Kopf mit einer Unterkopfbeschichtung oder Unterkopfdichtung aufweisen, sodass die Unterkopfbeschichtung oder Unterkopfdichtung an dem lackierten Flanschbereich des Unterbaus oder des Aufbaumoduls anliegt.

Die Unterkopfbeschichtung ist bevorzugt eine thermoplastische Unterkopfbeschichtung.

Die Vollstanznieten sind bevorzugt von einer Nassraumseite in Richtung einer Trockenraumseite gesetzt.

Die Unterkopfdichtung kann durch eine radial außen umlaufende, ringförmige Dichtung gebildet werden.

Die Dichtung schließt bevorzugt, zumindest vor dem Setzen, am Außendurchmesser des Kopfes bündig ab.

Die Dichtung ist bevorzugt in eine Nut des Kopfes eingearbeitet.

Der Unterbau und das Aufbaumodul sind zusätzlich bevorzugt durch Klebstoff und/oder Schrauben verbunden.

### Kurzbeschreibung der Zeichnungen

Die Erfindung wird im Folgenden beispielhaft unter Bezugnahme auf die Zeichnungen beschrieben.
- Fig. 1: ist eine Schnittansicht einer erfindungsgemäß hergestellten Verbindung zwischen einem Unterbau und einem Seitenwandmodul als Aufbaumodul.
- Fig. 2: ist eine Detaildarstellung, welche den Verbindungsbereich gemäß strichliertem Kreis in Fig. 1 in einer ersten Ausführungsform zeigt.
- Fig. 3: ist eine Detaildarstellung, welche den Verbindungsbereich gemäß strichliertem Kreis in Fig. 1 in einer zweiten Ausführungsform zeigt.
- Fig. 4: ist eine Darstellung, welche eine Vollstanzniet gemäß Fig. 3 vor dem Setzen zeigt.

### Detaillierte Beschreibung der Erfindung

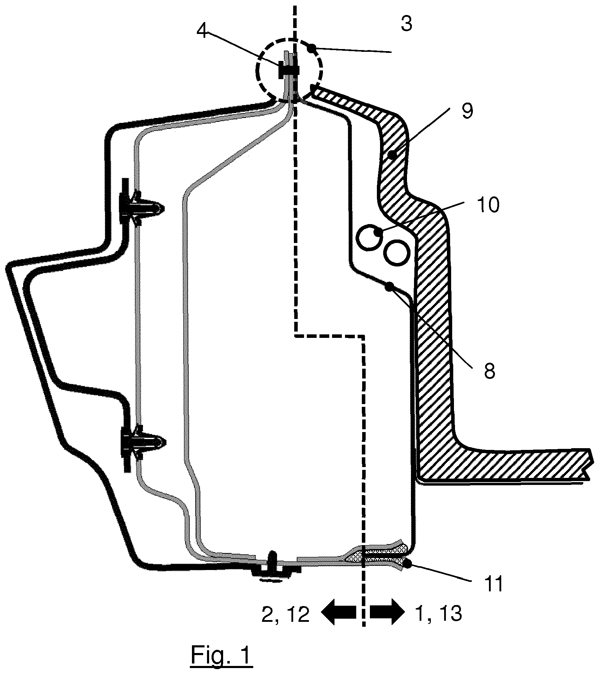

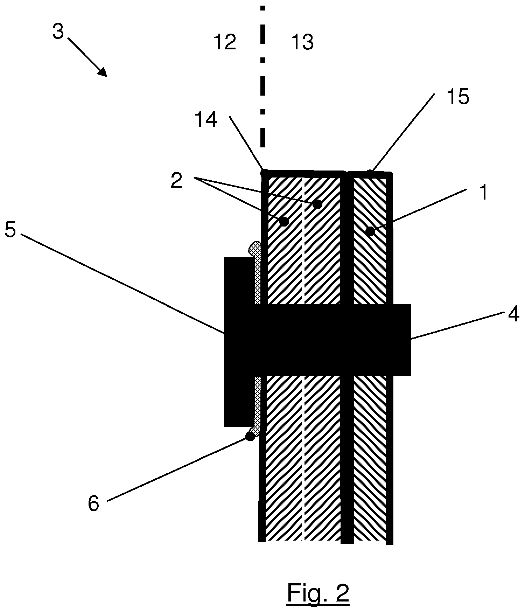

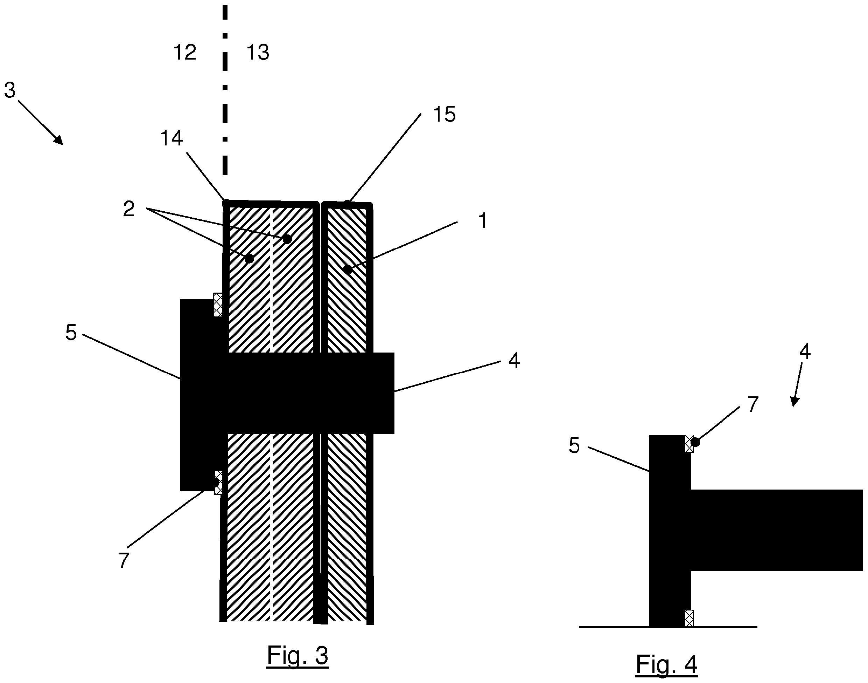

Fig. 1 zeigt eine Schnittansicht einer erfindungsgemäß hergestellten Verbindung zwischen einem Unterbau 1, rechts der strichlierten Linie dargestellt, und einem Seitenwandmodul als Aufbaumodul 2, links der strichlierten Linie dargestellt. Der Unterbau 1 weist einen Boden 8 mit einem Teppich 9 auf. Zwischen Teppich 9 und Boden 8 sind Elektrikleitungen 10 angeordnet. Das Aufbaumodul 2 ist an einem in der Fig. 1 unten dargestellten Ende durch ein Kleberbad 11 mit dem Unterbau 1 dauerhaft verbunden. Am oben dargestellten Ende des Unterbaus 1 und des Aufbaumoduls 2 weisen diese Flanschbereiche 3 auf, die erfindungsgemäß durch eine Vollstanzniet 4 verbunden sind. Ein Kopf der Vollstanzniet 4 liegt dabei auf Seiten des Aufbaumoduls 2, und somit in einem Nassraum 12, wie in den Fig. 2 und 3 besser ersichtlich.

Fig. 2 ist eine Detaildarstellung, welche den Flanschbereich 3 gemäß strichliertem Kreis in Fig. 1 in einer ersten Ausführungsform zeigt. Der Vollstanzniet 4 weist einen Kopf 5 auf mit einer Unterkopfbeschichtung 6, so dass die Unterkopfbeschichtung 6 im Nassraum 12 an dem lackierten Flanschbereich 3 auf Seiten des Aufbaumoduls 2 anliegt. Das Aufbaumodul 2 wird dabei durch eine aus zwei Blechen gebildete Schweißgruppe mit einer KTL (kathodische Tauschlacklackierung)-Beschichtung und einem Decklackaufbau 14 gebildet. Der Unterbau 1 wird durch ein einzelnes Blech mit einer KTL Beschichtung 15 gebildet.

Fig. 3 ist eine Detaildarstellung einer alternativen Ausführungsform zu Fig. 2. Im Gegensatz zu Fig. 2 wird hier statt der Unterkopfbeschichtung 6 zum Abdichten und Versiegeln auf Seiten des Nassraums 12 eine Unterkopfdichtung 7 für die Vollstanzniet 4 verwendet. Die Unterkopfdichtung 7 wird durch eine radial außen umlaufende, ringförmige Dichtung gebildet. Die Dichtung ist in eine radial umlaufende Nut des Kopfes 5 eingearbeitet.

Fig. 4 ist eine Darstellung, welche einen Vollstanzniet gemäß Fig. 3 vor dem Setzen zeigt. Vor dem Setzen schließt die Dichtung am Außendurchmesser des Kopfes 5 bündig ab, sodass eine störungsfreie automatische Zuführung der Vollstanznieten in einem Setzgerät ermöglicht wird.

### Bezugszeichenliste

- 1: Unterbaue
- 2: Aufbaumodul
- 3: Flanschbereich
- 4: Vollstanzniet
- 5: Kopf
- 6: Unterkopfbeschichtung
- 7: Unterkopfdichtung
- 8: Boden
- 9: Teppich
- 10: Elektrikleitungen
- 11: Kleberbad
- 12: Nassraum
- 13: Trockenraum
- 14: KTL (kathodische Tauchlacklackierung)-Beschichtung und Decklackaufbau
- 15: KTL-Beschichtung

## Patentansprüche

1. Verfahren zur Herstellung eines Kraftfahrzeuges umfassend die Schritte:
- Erzeugen eines Unterbaues (1) und zumindest eines Aufbaumoduls (2) des Kraftfahrzeuges, wobei der Unterbau (1) und das Aufbaumodul (2) jeweils zumindest einen Flanschbereich (3) aufweisen,
- Lackieren zumindest des Flanschbereichs (3) des Unterbaus (1) und/oder des Aufbaumoduls (2),
- Verbinden der Flanschbereiche (3) von Unterbau (1) und Aufbaumodul (2) mittels Vollstanznieten (4), wobei die Vollstanznieten (4) jeweils einen Kopf (5) mit einer Unterkopfbeschichtung (6) oder Unterkopfdichtung (7) aufweisen, so dass die Unterkopfbeschichtung (6) oder Unterkopfdichtung (7) an dem lackierten Flanschbereich (3) des Unterbaus (1) oder des Aufbaumoduls (2) anliegt.

2. Verfahren nach Anspruch 1,
**dadurch gekennzeichnet, dass** die Unterkopfbeschichtung (6) eine thermoplastische Unterkopfbeschichtung (6) ist.

3. Verfahren nach zumindest einem der vorhergehenden Ansprüche,
**dadurch gekennzeichnet, dass** die Vollstanznieten (4) von einer Nassraumseite (12) in Richtung einer Trockenraumseite (13) gesetzt werden.

4. Verfahren nach zumindest einem der vorhergehenden Ansprüche,
**dadurch gekennzeichnet, dass** die Unterkopfdichtung (7) durch eine radial außen umlaufende, ringförmige Dichtung gebildet wird.

5. Verfahren nach Anspruch 4,
**dadurch gekennzeichnet, dass** die Dichtung, zumindest vor dem Setzen der jeweiligen Vollstanzniet (4), am Außendurchmesser des Kopfes (5) bündig abschließt.

6. Verfahren nach Anspruch 4 oder 5,
**dadurch gekennzeichnet, dass** die Dichtung in eine Nut des Kopfes (5) eingearbeitet ist.

7. Verfahren nach zumindest einem der vorhergehenden Ansprüche,
**dadurch gekennzeichnet, dass** der Unterbau (1) und das Aufbaumodul (2) zusätzlich durch Kleben und/oder Schrauben verbunden werden.

8. Kraftfahrzeug umfassend einen Unterbau (1) und zumindest ein Aufbaumodul (2) des Kraftfahrzeuges, wobei der Unterbau (1) und das Aufbaumodul (2) jeweils zumindest einen Flanschbereich (3) aufweisen, wobei zumindest der Flanschbereich (3) des Unterbaus (1) und/oder des Aufbaumoduls (2) lackiert ist, wobei die Flanschbereiche (3) von Unterbau (1) und Aufbaumodul (2) mittels Vollstanznieten (4) verbunden sind, wobei die Vollstanznieten (4) jeweils einen Kopf (5) mit einer Unterkopfbeschichtung (6) oder Unterkopfdichtung (7) aufweisen, sodass die Unterkopfbeschichtung (6) oder Unterkopfdichtung (7) an dem lackierten Flanschbereich (3) des Unterbaus (1) oder des Aufbaumoduls (2) anliegt.

9. Kraftfahrzeug nach Anspruch 8,
**dadurch gekennzeichnet, dass** die Unterkopfbeschichtung (6) eine thermoplastische Unterkopfbeschichtung (6) ist.

10. Kraftfahrzeug nach zumindest einem der vorhergehenden Ansprüche 8 bis 9,
**dadurch gekennzeichnet, dass** die Vollstanznieten (4) von einer Nassraumseite (12) in Richtung einer Trockenraumseite (13) gesetzt sind.

11. Kraftfahrzeug nach zumindest einem der vorhergehenden Ansprüche 8 bis 10,
**dadurch gekennzeichnet, dass** die Unterkopfdichtung (7) durch eine radial außen umlaufende, ringförmige Dichtung gebildet wird.

12. Kraftfahrzeug nach Anspruch 11,
**dadurch gekennzeichnet, dass** die Dichtung am Außendurchmesser des Kopfes (5) bündig abschließt.

13. Kraftfahrzeug nach zumindest einem der vorhergehenden Ansprüche 11 bis 12,
**dadurch gekennzeichnet, dass** die Dichtung in eine Nut des Kopfes (5) eingearbeitet ist.

14. Kraftfahrzeug nach zumindest einem der vorhergehenden Ansprüche 8 bis 13,
**dadurch gekennzeichnet, dass** der Unterbau (1) und das Aufbaumodul (2) zusätzlich durch Klebstoff und/oder Schrauben verbunden sind.

## Claims

1. Method for manufacturing a motor vehicle, comprising the following steps:
- producing a substructure (1) and at least one body module (2) of the motor vehicle, wherein the substructure (1) and the body module (2) each have at least one flange region (3),
- painting at least the flange region (3) of the substructure (1) and/or of the body module (2),
- connecting the flange regions (3) of substructure (1) and body module (2) by means of solid punch rivets (4), wherein the solid punch rivets (4) each have a head (5) with an under head coating (6) or an under head seal (7), and therefore the under head coating (6) or under head seal (7) bears against the painted flange region (3) of the substructure (1) or of the body module (2).

2. Method according to Claim 1, **characterized in that** the under head coating (6) is a thermoplastic under head coating (6).

3. Method according to at least one of the preceding claims, **characterized in that** the solid punch rivets (4) are set from a wet compartment side (12) in the direction of a dry compartment side (13).

4. Method according to at least one of the preceding claims, **characterized in that** the under head seal (7) is formed by an annular seal encircling radially on the outside.

5. Method according to Claim 4, **characterized in that** the seal ends flush at the outside diameter of the head (5), at least before the respective solid punch rivet (4) is set.

6. Method according to Claim 4 or 5, **characterized in that** the seal is incorporated into a groove in the head (5).

7. Method according to at least one of the preceding claims, **characterized in that** the substructure (1) and the body module (2) are additionally connected by adhesive bonding and/or screwing.

8. Motor vehicle comprising a substructure (1) and at least one body module (2) of the motor vehicle, wherein the substructure (1) and the body module (2) each have at least one flange region (3), wherein at least the flange region (3) of the substructure (1) and/or of the body module (2) is painted, wherein the flange regions (3) of substructure (1) and body module (2) are connected by means of solid punch rivets (4), wherein the solid punch rivets (4) each have a head (5) with an under head coating (6) or under head seal (7), and therefore the under head coating (6) or under head seal (7) bears against the painted flange region (3) of the substructure (1) or of the body module (2).

9. Motor vehicle according to Claim 8, **characterized in that** the under head coating (6) is a thermoplastic under head coating (6).

10. Motor vehicle according to at least one of the preceding Claims 8 and 9, **characterized in that** the solid punch rivets (4) are set from a wet compartment side (12) in the direction of a dry compartment side (13).

11. Motor vehicle according to at least one of the preceding Claims 8 to 10, **characterized in that** the under head seal (7) is formed by an annular seal encircling radially on the outside.

12. Motor vehicle according to Claim 11, **characterized in that** the seal ends flush at the outside diameter of the head (5).

13. Motor vehicle according to at least one of the preceding Claims 11 and 12, **characterized in that** the seal is incorporated into a groove in the head (5).

14. Motor vehicle according to at least one of the preceding Claims 8 to 13, **characterized in that** the substructure (1) and the body module (2) are additionally connected by adhesive and/or screws.

## Revendications

1. Procédé de fabrication d'un véhicule automobile, comprenant les étapes suivantes :
- réalisation d'un châssis (1) et d'au moins un module de caisse (2) du véhicule automobile, le châssis (1) et le module de caisse (2) présentant chacun au moins une région de bride (3),
- peinture d'au moins la région de bride (3) du châssis (1) et/ou du module de caisse (2),
- raccordement des régions de bride (3) du châssis (1) et du module de caisse (2) au moyen de rivets pleins auto-poinçonneurs (4), les rivets pleins auto-poinçonneurs (4) présentant chacun une tête (5) avec un revêtement sous tête (6) ou un joint sous tête (7), de telle sorte que le revêtement sous tête (6) ou le joint sous tête (7) s'applique contre la région de bride peinte (3) du châssis (1) ou du module de caisse (2).

2. Procédé selon la revendication 1,
**caractérisé en ce que** le revêtement sous tête (6) est un revêtement sous tête thermoplastique (6).

3. Procédé selon au moins l'une quelconque des revendications précédentes,
**caractérisé en ce que** les rivets pleins auto-poinçonneurs (4) sont posés depuis un côté d'espace humide (12) dans la direction d'un côté d'espace sec (13).

4. Procédé selon au moins l'une quelconque des revendications précédentes,
**caractérisé en ce que** le joint sous tête (7) est formé par un joint annulaire radialement périphérique extérieur.

5. Procédé selon la revendication 4,
**caractérisé en ce que** le joint, au moins avant la pose du rivet plein auto-poinçonneur (4) respectif, se termine en affleurement avec le diamètre extérieur de la tête (5).

6. Procédé selon la revendication 4 ou 5,
**caractérisé en ce que** le joint est incorporé dans une rainure de la tête (5).

7. Procédé selon au moins l'une quelconque des revendications précédentes,
**caractérisé en ce que** le châssis (1) et le module de caisse (2) sont en outre assemblés par collage et/ou vissage.

8. Véhicule automobile comprenant un châssis (1) et au moins un module de caisse (2) du véhicule automobile, le châssis (1) et le module de caisse (2) présentant chacun au moins une région de bride (3), au moins la région de bride (3) du châssis (1) et/ou du module de caisse (2) étant peinte, les régions de bride (3) du châssis (1) et du module de caisse (2) étant assemblées au moyen de rivets pleins auto-poinçonneurs (4), les rivets pleins auto poinçonneurs (4) présentant chacun une tête (5) avec un revêtement sous tête (6) ou un joint sous tête (7), de telle sorte que le revêtement sous tête (6) ou le joint sous tête (7) s'applique contre la région de bride peinte (3) du châssis (1) ou du module de caisse (2).

9. Véhicule automobile selon la revendication 8, **caractérisé en ce que** le revêtement sous tête (6) est un revêtement sous tête thermoplastique (6).

10. Véhicule automobile selon au moins l'une quelconque des revendications précédentes 8 à 9, **caractérisé en ce que** les rivets pleins auto-poinçonneurs (4) sont posés depuis un côté d'espace humide (12) dans la direction d'un côté d'espace sec (13).

11. Véhicule automobile selon au moins l'une quelconque des revendications précédentes 8 à 10, **caractérisé en ce que** le joint sous tête (7) est formé par un joint annulaire radialement périphérique extérieur.

12. Véhicule automobile selon la revendication 11, **caractérisé en ce que** le joint se termine en affleurement avec le diamètre extérieur de la tête (5) .

13. Véhicule automobile selon au moins l'une quelconque des revendications précédentes 11 à 12, **caractérisé en ce que** le joint est incorporé dans une rainure de la tête (5).

14. Véhicule automobile selon au moins l'une quelconque des revendications précédentes 8 à 13, **caractérisé en ce que** le châssis (1) et le module de caisse (2) sont en outre assemblés par collage et/ou vissage.
